(19) **Europäisches Patentamt**
**European Patent Office**
**Office européen des brevets**

(11) **EP 1 850 640 B1**

(12) **EUROPEAN PATENT SPECIFICATION**

(45) Date of publication and mention
of the grant of the patent:
**17.06.2009 Bulletin 2009/25**

(51) Int Cl.:
*H04S 7/00* *(2006.01)*    *H04R 27/00* *(2006.01)*

(21) Application number: **06008503.2**

(22) Date of filing: **25.04.2006**

(54) **Vehicle communication system**

Fahrzeugkommunikationssystem

Système de communication pour un véhicule

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**31.10.2007 Bulletin 2007/44**

(73) Proprietor: **Harman Becker Automotive Systems GmbH**
**76307 Karlsbad (DE)**

(72) Inventors:
• **Buck, Markus**
**88400 Biberach (DE)**

• **Haulick, Tim, Dr.**
**89143 Blaubeuren (DE)**
• **Schmidt, Gerhard Uwe, Dr.**
**89081 Ulm (DE)**

(74) Representative: **Bertsch, Florian Oliver et al**
**Kraus & Weisert**
**Patent- und Rechtsanwälte**
**Thomas-Wimmer-Ring 15**
**80539 München (DE)**

(56) References cited:
**US-A1- 2002 102 002**    **US-A1- 2002 197 967**
**US-A1- 2004 170 286**    **US-A1- 2005 152 562**
**US-A1- 2006 023 892**

## Description

This invention relates to a vehicle communication system and to a method for controlling a speech output of said vehicle communication system.

In vehicles the use of communication systems has been proliferation over the last few years. In current vehicles a communication module is often incorporated. These communication systems normally comprise .several microphones which are positioned at predetermined locations within the vehicle. It may happen that one microphone is used for one vehicle seat position to pick up the voice signal of the user. Additionally, it is possible to use an array of microphones for one vehicle seat position. With such an array of microphones it is possible to pick up the voice signal of a vehicle passenger for certain directions. These direction-limited signal pick up is also known by the expression "beamforming". The most common application is hands-free telephony with a communication partner outside the vehicle.

Communication systems in vehicles can be used for different purposes. First of all, it is possible to use the human speech for controlling predetermined electronic devices using a speech command. Additionally, telephone calls in a conference call are possible with two or more subscribers within the vehicle. In this example a person sitting on a front seat and a person sitting on one of the back seats may talk to a third person on the other end of the line using a hands-free communication system inside the vehicle. Moreover, it is possible to use the communication system inside the vehicle for the communication of different vehicle passengers to each other. When several persons sitting on different seats in a vehicle use the same communication system, the different microphones provided in the vehicle pick up the voice signals of the different passengers. A mixer combines the different audio signal components of the different microphones to a resulting speech output signal. To this end the communication system has to weight the different signal components detected by the different microphones in order to generate a resulting speech output signal. The weighting of the signal components normally depends on time and depends on the speech activity of the passenger the voice signal of whom is recorded. In systems known in the art the speech activity for each vehicle seat is determined by processing the audio signal detected by the microphone or the array of microphones for a certain vehicle seat. In these system the speech activities for a certain vehicle seat have to be controlled during use of the communication system. It is possible that a passenger does not speak at the beginning of the conversation, but does start to communicate with the other persons during the conversation. In all these cases the system has to verify during the whole conversation whether a speech signal can be detected for a certain vehicle seat.

This can lead to false detection of speech signals, as speech signals from other vehicle passengers may be detected by a certain microphone. This false detection normally lowers the weighting of the actually speaking passenger resulting in a speech output signal of lower signal quality. Additionally, the weighting for the different vehicle seats are not set to zero in order to avoid that a spontaneous utterance of a passenger is also transmitted via the communication system. If the weighting for a predetermined vehicle seat is set to zero, the beginning of an utterance would not be transmitted. This is why in known communication systems none of the vehicle seat speech signals has a zero weighting.

US 2006/23892 A1 discloses a communications device for transmitting acoustic signals in a motor vehicle. Microphones may be manually switched off by a vehicle passenger, whereas other microphones may be surpressed bored on detected speech signals.

Accordingly a need exists to improve vehicle communication systems in such a way that the resulting speech output signal reflects the actual presence of the passengers inside the vehicle. This need is met by the features of the independent claims. In the dependent claims preferred embodiments of the invention are described.

According to a first aspect of the invention the vehicle communication system comprises a plurality of microphones adapted to detect speech signals of different vehicle passengers. Furthermore, a mixer is provided combining the audio signal components of the different microphones to a resulting speech output signal. A weighting unit determines the weighting of the audio signal components for the resulting speech output signal. According to the invention the weighting unit determines the weighting of the signal components taking into account non-acoustical information about the presence of a vehicle passenger. This non-acoustic information can determine with a high probability whether a vehicle passenger is present on a certain vehicle seat. In the prior art systems only acoustical information was used for determining the weighting of the different signal components. However, these acoustical information do not provide an information whether a certain acoustical signal is coming from a predetermined vehicle seat with a high probability By taking into account non-acoustical information it can be determined whether a vehicle seat is occupied or not. Depending on the presence of a passenger on the seat the resulting speech output signal can be generated by taking into account signal components from said vehicle seat or by not taking into account signal components of said vehicle seat.

According to one embodiment of the invention a vehicle seat pressure sensor is used, and the weighting unit determines the weighting of the audio signal components taking into account signals from said pressure sensor. The pressure sensor can determine with a high accuracy whether a passenger is sitting on a vehicle seat or not. When the pressure sensor of a predetermined vehicle seat determines that no one is sitting on said seat, the weighting for the signal components for said seat are set to zero.

Furthermore, it is possible to use the non-acoustical information provided by an image sensor. According to this embodiment of the invention the image sensor can be used, the weighting unit determines the weighting of the audio signal components taking into account signals from said image sensor. By way of example a camera can take pictures of the different vehicle seats. When no passenger is detected on a vehicle seat, the weighting for the microphones of said vehicle seat are set to zero. The weighting of the other vehicle seats for which a passenger was detected can now be adjusted in accordance with the detected acoustical information. Thus, the quality of the resulting speech output signal can be improved, as signal components for which no speech signal exists, are not used for generating the resulting output signal. When a camera it is used, it is also possible to control the camera in such a way that moving pictures can be generated. With this the speech activity of the person can be determined from the pictures of the camera, e.g. by detecting the movement of the lips. This information can be used for detecting the speech activity of the passenger from whom the pictures are taken. When it is determined that the passenger on the seat does not speak using the image signal, the noise can be suppressed in a more effective way, as it is easier to differentiate between moments where the passenger is speaking and moments where the passenger is not speaking.

According to another aspect of the invention loudspeakers of the vehicle communication system can also be adapted to the presence of the vehicle passenger. If several loudspeakers are used, it is possible to direct the emitted sound to a certain direction by introducing time delays in the signals emitted by different loudspeakers. If the system knows that a certain vehicle seat is not occupied, the loudspeakers of the vehicle communication system can be optimized for the person or persons who are present in the vehicle. This beamforming of the audio signal can be done with any audio signal emitted by the loudspeaker, be it music or the voice signal in case of a communication with a third person.

In an in-car communication system loudspeakers which are located close to a passenger are used for play back signals for this passenger. If the seat is not occupied by a person, there is no need for the in-car communication system to play back signals over the corresponding loudspeakers. Thus, the risk of howling is reduced significantly and the system stability increases.

Surround sound systems aim to optimize sound quality and sound effects for the different seats. Because the effect should be present for all seats there is always a compromise for the quality. If a seat is not occupied by a person, there is no need to optimize the sound quality for this position. Thus, the quality for the other seat positions can be further optimized.

Often a microphone array is used for detecting the audio signals of different vehicle seats. By way of example a microphone array of two to four microphones may be arranged in the front part of the vehicle picking up the speech signals from the driver and from the other passenger front seat. These different signals detected by one array of microphones can then be fed to a beamforming unit which generates a vehicle seat speech signal relative to each vehicle seat combining the signal detected from the array of microphones.

According to another aspect of the invention a method for controlling a speech output of a vehicle communication system is provided comprising the following steps. The speech signal of at least one vehicle passenger is detected using a plurality of microphones. Furthermore, the different speech signal component detected by the different microphones are weighted and the weighted speech signal components are combined to a resulting speech output signal. According to the invention the weighting of the different speech signal components is determined taking into account non-acoustical information about the present of vehicle passengers. By way of example the signal of a seat pressure sensor can be used for detecting the presence of a passenger and/or the signal of an image sensor can be used for detecting the presence of a passenger on the different vehicle seat positions. According to the invention, when it is detected that for a predetermined vehicle seat position no passenger can be detected, the signal components for said vehicle seat position are set to zero. This helps to improve the signal quality of the generated speech output signal as it is possible to consider only signal components of vehicle seat positions where a passenger is present.

Preferably, when an array of microphones is used the audio signal components for said vehicle seat position are determined, and the weighting of the signal components is determined and a speech signal beam is formed for said vehicle position. The beamforming is then performed for the different seat directions. When it is detected that for a predetermined vehicle seat position no passenger is present, the weighting for said non-occupied vehicle seat position is set to zero.

These and other aspects of the invention will become apparent from the embodiments described hereinafter.

In the drawings

Fig. 1 shows a schematic view of a vehicle communication system taking into account non-acoustical information.

Fig. 2 is a flowchart showing the different steps for determining an enhanced output signal, and

Fig. 3 shows a flowchart of a method in which the audio output is optimized for the vehicle passengers who are actually present.

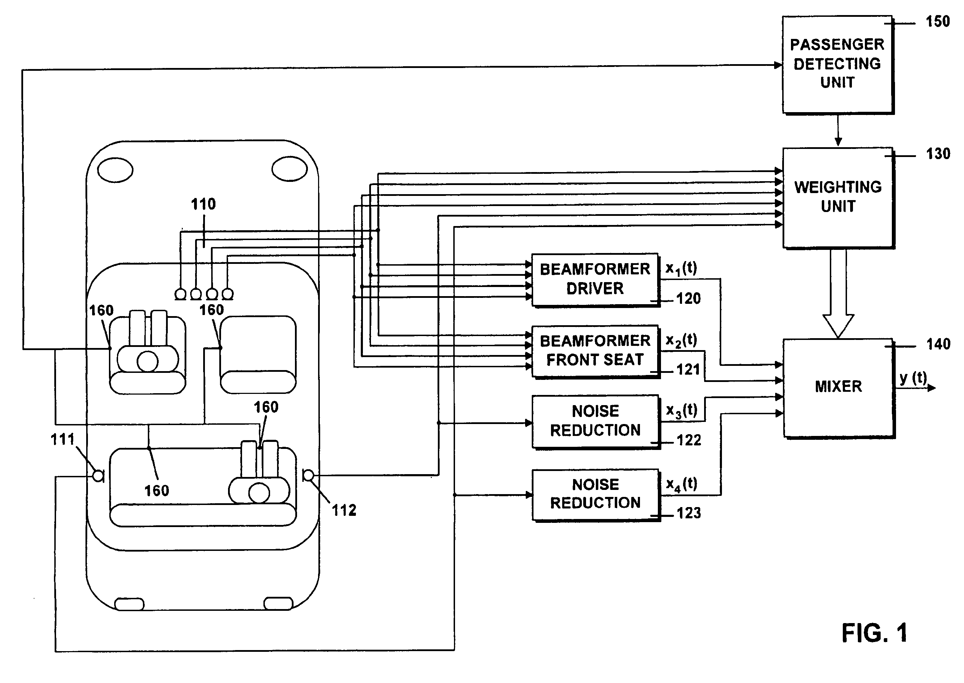

In Fig. 1 a vehicle communication system is shown in which a speech output signal is generated using non-acoustical information about the presence of a passenger. The communication system comprises several microphones for picking up the audio signals of the passenger. By way of example in the present case four microphones are positioned in a microphone array 110 in the front of the vehicle for detecting the speech signals of the driver's seat and of the other front passenger seat. Additionally, a microphone 111 is provided for detecting the speech signal of a passenger sitting in the back on the left side and a microphone 112 is arranged for picking up the speech signal of a person sitting in the back on the right side. The four microphones of the array 110 form a speech signal $x_1(t)$ for the driver in the beamformer 120. In the beamformer 120 the signals of the four microphones are processed in such a way that mainly signals originating from the direction of the driver are used. The same is done for the other front seat, where the signal of the four microphones of the array 110 are used for determining a signal $x_2(t)$ in the beamformer of the front seat 121. The microphones 111 and 112 pick up the speech signal of the seat in the back on the left and right side, respectively. Here in the present case only one microphone is used in the back so that a beamforming unit is not necessary. In a noise reduction unit 122 the speech signal of the right hand side of the back is processed by noise reduction algorithms. The same is done for the speech signal detected by the microphone 111 in the noise reduction unit 123.

Summarizing a seat-related speech signal is determined for each of the different vehicle positions. In the embodiment shown four different positions are possible for which the speech signals are detected. For each passengers a signal $x_p(t)$ is calculated. From the different passenger signals $x_p(t)$ a resulting speech output signal $y(t)$ is calculated using the following equation:

$$y(t) = \sum_{p=1}^{P} a_p(t) x_p(t)$$

The maximum number of passengers participating at the communication is P, the factor $a_p(t)$ being the weighting for the different users of the communication system. As can be seen from the above equation the weighting depends on time as the resulting output signal should be generated from the signal components of the passengers which are actually speaking. The weighting of the different signal components is determined in a weighting unit 130. In the weighting unit 130 the different weightings $a_p(t)$ are calculated and fed to a mixer 140 which mixes the different vehicle seat speech signals in order to generate an resulting speech output signal $y(t)$. Furthermore, a passenger detecting unit 150 is provided which uses non-acoustical information about the presence of a vehicle passenger for the different vehicle seat positions. The passenger detecting unit can use different sensors 160 which detect the presence of a passenger on the different vehicle seats. By way of example the sensors 160 could be a pressure sensor which detect the presence of a passenger on a seat by the weight provided on said seat. Furthermore, it is possible to use a camera taking pictures from the different vehicle seats. When a camera is used, the video information can also be used for detecting the speech activity of a passenger by detecting the movement of the lips. When the lips are moving and the passenger is speaking the weighting of the signals for said passenger can be increased, whereas the weighting can be decreased for passengers which are actually not speaking. When it is detected that no passenger is present on a vehicle seat as shown in the figure for the front seat on the right and the back seat on the left the weighting coefficients for the seat-related speech signal $x_p(t)$ can be set to zero. In the embodiment shown this would mean that the weighting for the signal $x_2(t)$ and $x_4(t)$ are set to zero so that signal components from these vehicle seats do not contribute to the output signal $y(t)$.

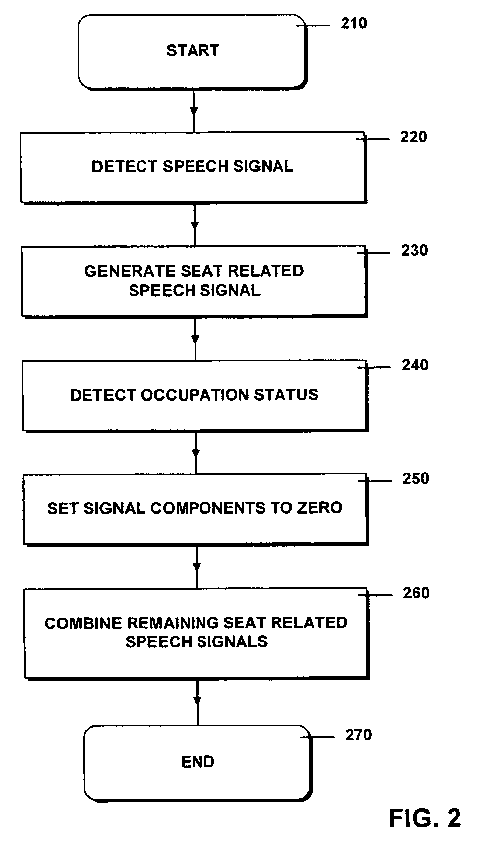

In connection with Fig. 2 the different steps are explained which are needed for calculating an improved output signal $y(t)$. The process starts in step 210. In step 220 the speech signals are detected using the different microphone positioned in the vehicle. In step 230 the audio signals detected by the microphones 110 to 112 are combined in order to generate a vehicle seat-related speech signal $x_p(t)$ for each vehicle seat (step 230). Furthermore, the occupation status of the different vehicle seats is detected in step 240. In dependence of the occupation status the signal components for which no passenger was detected, are set to zero in step 250. This helps to avoid to use signal components detected by microphones where no passenger is sitting. After setting the seat-related speech signal components to zero the remaining seat-related speech signals are combined in step 260 and weighted depending on the speech activity of the different passengers. The process ends in step 270.

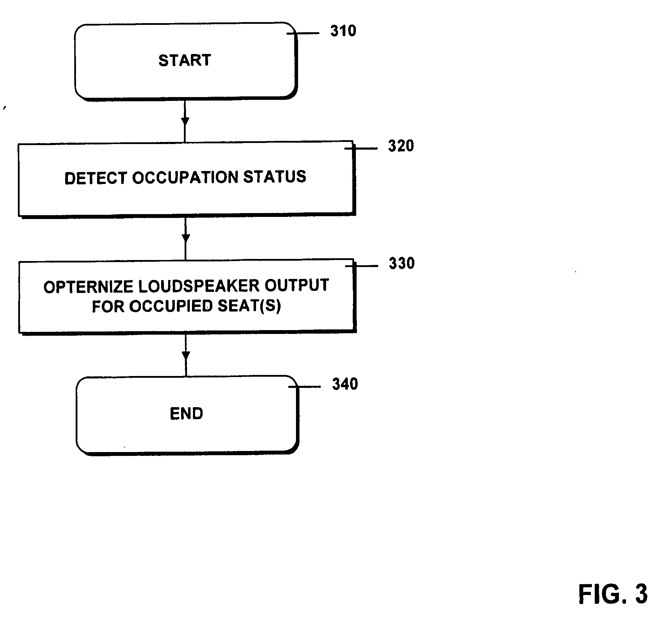

In connection with Fig. 3 it is described how the information about the presence of a passenger on a vehicle seat can be used for improving the audio signal output by the loudspeakers (not shown in Fig. 1). After starting the process in step 310 the occupation status of the different vehicle seats can be detected in 320 using either a pressure sensor or using a camera or using both sensors. For the vehicle seats for which no passenger is present no audio output has to be generated by the loudspeakers. When several loudspeakers are used it is possible to form a sound beam directed to one of the vehicle seats. When it is known that one of the vehicle seats is not occupied, e.g. the seat next to the driver, the loudspeakers can be controlled in such a way that the sound beam is directed to the occupied vehicle seat (step 330). With this beamforming the sound can be focussed on the person sitting on the vehicle seat. The weighting for the formed sound beam, which was formed for empty seats, can be set to zero. This has the further advantage that the microphones for picking up the speech signals of the passengers which are normally positioned in a distance of about 30 to 70 cm do pick up less sound emitted from the loudspeakers, as this sound is directed more precisely to the passenger's head. The process ends in step 340.

Summarizing the present invention provides a system and a method having an enhanced speech output signal, as signal components for which no passenger exists can be realiably excluded. It is not necessary to cheap signal components detected by microphones positioned in the neighbourhood of vehicle seats on which no passenger is sitting. As a result less signals have to be considered for calculating the output signal and the use of signal components detected from microphones from other passengers can be avoided.

**Claims**

1. Vehicle communication system comprising:

   - a plurality of microphones (110, 111, 112) adapted to detect speech signals of different vehicle passengers,
   - a mixer (140) combining the audio signal components of the different microphones to a resulting speech output signal,
   - a weighting unit (130) determining the weighting of said audio signal components for the resulting speech output signal,

   **characterized in that**
   the weighting unit determines the weighting of the signal components taking into account non- acoustical information from a sensor (160) about the presence of a vehicle passenger,
   and that, if the presence of a passenger at a predetermined vehicle seat position can not be detected, the weighting unit sets the weighting of the signal components of said vehicle seat position to zero.

2. Vehicle communication system according to claim 1, **characterized by** further comprising a vehicle seat pressure sensor, wherein the weighting unit determines the weighting of the audio signal components taking into account signals from said pressure sensor.

3. Vehicle communication system according to claim 1 or 2, **characterized by** further comprising an image sensor, wherein the weighting unit determines the weighting of the audio signal components taking into account signals from said image sensor.

4. Vehicle communication system according to any of the preceding claims, **characterized by** further comprising a plurality of loudspeakers for outputting audio signals, the use of the different loudspeakers depending on said information about the presence of a vehicle passenger.

5. Vehicle communication system according to any of the preceding claims, **characterized in that** image sensor detects the speech activity of a vehicle passenger.

6. Vehicle communication system according to any of the preceding claims, **characterized by** further comprising a beamforming unit which generates a vehicle seat speech signal combining the signals detected from a plurality of microphones picking up speech signals from one passenger sitting on a vehicle seat.

7. Method for controlling a speech output of a vehicle communication system, comprising the following steps:

   - detecting speech signals of at least one vehicle passenger using a plurality of microphones (110, 111, 112),
   - weighting the speech signal components detected by the different microphones,
   - combining the weighted speech signal components to a resulting speech output signal,

   **characterized in that**
   the weighting of the different speech signal components is determined taking into account non-acoustical information from a sensor (160) about the presence of vehicle passengers, and
   that the weighting for the signal components for a predetermined vehicle seat position is set to zero, when it is detected that there is no passenger on said vehicle seat position.

8. Method according to claim 7, **characterized by** further comprising the step of determining the audio signal components for the different vehicle seat passenger positions, wherein the weighting of the signal components is determined for the different vehicle seat positions.

9. Method according to claim 7 or 8, wherein the resulting speech signal is used for

   - the voice controlled operation of a vehicle component,
   - a conference call with an external subscriber and at least two vehicle passengers, and/or
   - the communication of different vehicle passengers with each other.

10. Method according to any of claims 7 to 9, **characterized by** further comprising the step of adding the different weighted signal components detected by the microphone to the resulting speech output signal.

**11.** Method according to any of claims 7 to 10, **characterized by** further comprising the step of controlling the output of an audio signal via a plurality of loudspeakers depending on the non-acoustical information about the presence of a vehicle passenger for a predetermined vehicle position.

**12.** Method according to claim 11, **characterized in that** the output of the audio signal via the loudspeakers is optimized for the vehicle seat positions, for which it has been determined that a passenger is present on said position.

**13.** Method according to any of claims 7 to 12, wherein the signal of a seat pressure sensor is detected for detecting the presence of a passenger.

**14.** Method according to any of claims 7 to 13, wherein the signal of an image sensor is detected for detecting the presence of a passenger

**15.** Method according to any of claims 7 to 14, **characterized by** further comprising the steps of detecting the speech activity of a vehicle passenger taking into account the signal from an image sensor.

**Patentansprüche**

**1.** Fahrzeugkommunikationssystem, umfassend:

- mehrere Mikrophone (110,111,112), welche ausgestaltet sind, Sprachsignale von unterschiedlichen Fahrzeuginsassen zu erfassen,
- einen Mischer (140), welcher die Audiosignalkomponenten der unterschiedlichen Mikrophone zu einem resultierenden Sprachausgabesignal kombiniert,
- eine Gewichtungseinheit (130), welche die Gewichtung der Audiosignalkomponenten für das resultierende Sprachausgabesignal bestimmt,

**dadurch gekennzeichnet, dass**
die Gewichtungseinheit die Gewichtung der Signalkomponenten unter Berücksichtigung einer nicht-akustischen Information von einem Sensor (160) über die Anwesenheit eines Fahrzeuginsassen bestimmt,
und dass, wenn die Anwesenheit eines Insassen an einer vorbestimmten Fahrzeugsitzposition nicht erfasst werden kann, die Gewichtungseinheit die Gewichtung der Signalkomponenten von der Fahrzeugsitzposition auf Null setzt.

**2.** Fahrzeugkommunikationssystem nach Anspruch 1, **dadurch gekennzeichnet, dass** das System ferner einen Fahrzeugsitzdrucksensor umfasst, wobei die Gewichtungseinheit die Gewichtung der Audiosignalkomponenten unter Berücksichtigung von Signalen von dem Drucksensor bestimmt.

**3.** Fahrzeugkommunikationssystem nach Anspruch 1 oder 2, **dadurch gekennzeichnet, dass** das System ferner einen Bildsensor umfasst, wobei die Gewichtungseinheit die Gewichtung der Audiosignalkomponenten unter Berücksichtigung von Signalen von dem Bildsensor bestimmt.

**4.** Fahrzeugkommunikationssystem nach einem der vorhergehenden Ansprüche, **dadurch gekennzeichnet, dass** das System ferner mehrere Lautsprecher zum Ausgeben von Audiosignalen umfasst, wobei die Verwendung der unterschiedlichen Lautsprecher von der Information über das Vorhandensein eines Fahrzeuginsassen abhängt.

**5.** Fahrzeugkommunikationssystem nach einem der vorhergehenden Ansprüche, **dadurch gekennzeichnet, dass** der Bildsensor die Sprachaktivität eines Fahrzeuginsassen erfasst.

**6.** Fahrzeugkommunikationssystem nach einem der vorhergehenden Ansprüche, **dadurch gekennzeichnet, dass** das System ferner eine Strahlformungseinheit umfasst, welche ein Fahrzeugsitzsprachsignal erzeugt, welches die Signale kombiniert, welche von mehreren Mikrophonen erfasst wurden, welche Sprachsignale von einem auf einem Fahrzeugsitz sitzenden Insassen aufnehmen.

**7.** Verfahren zum Steuern einer Sprachausgabe eines Fahrzeugkommunikationssystems, umfassend die folgenden Schritte:

- Erfassen von Sprachsignalen von mindestens einem Fahrzeuginsassen unter Verwendung mehrerer Mikrophone (110,111,112),
- Gewichten der Sprachsignalkomponenten, welche von den unterschiedlichen Mikrophonen erfasst wurden,
- Kombinieren der gewichteten Sprachsignalkomponenten zu einem resultierendem Sprachausgabesignal,

**dadurch gekennzeichnet, dass**
das Gewichten der unterschiedlichen Sprachsignalkomponenten unter Berücksichtigung einer nicht-akustischen Information von einem Sensor (160) über das Vorhandensein eines Fahrzeuginsassen bestimmt wird, und
dass das Gewichten für die Signalkomponenten für eine vorbestimmte Fahrzeugsitzposition auf Null gesetzt wird, wenn erfasst wird, dass auf der Fahrzeugsitzposition kein Insasse vorhanden ist.

**8.** Verfahren nach Anspruch 7, **dadurch gekenn-**

**zeichnet, dass** das Verfahren ferner den Schritt eines Erfassens der Audiosignalkomponenten für die unterschiedlichen Fahrzeugsitzinsassenpositionen umfasst, wobei das Gewichten der Signalkomponenten für die unterschiedlichen Fahrzeugsitzpositionen bestimmt wird.

9. Verfahren nach Anspruch 7 oder 8, wobei das resultierende Sprachsignal verwendet wird für

    - den sprachgesteuerten Betrieb einer Fahrzeugkomponente,
    - eine Telefonkonferenz mit einem externen Teilnehmer und mindestens zwei Fahrzeuginsassen, und/oder
    - die Kommunikation von unterschiedlichen Fahrzeuginsassen miteinander.

10. Verfahren nach einem der Ansprüche 7 bis 9, **dadurch gekennzeichnet, dass** das Verfahren ferner den Schritt eines Hinzufügens der unterschiedlichen gewichteten Signalkomponenten, welche von dem Mikrophon erfasst wurden, zu dem resultierenden Sprachausgabesignal umfasst.

11. Verfahren nach einem der Ansprüche 7 bis 10, **dadurch gekennzeichnet, dass** das Verfahren ferner den Schritt eines Steuerns der Ausgabe eines Audiosignals über mehrere Lautsprecher in Abhängigkeit der nicht-akustischen Information über das Vorhandensein eines Fahrzeuginsassen für eine vorbestimmte Fahrzeugposition umfasst.

12. Verfahren nach Anspruch 11, **dadurch gekennzeichnet, dass** die Ausgabe des Audiosignals über die Lautsprecher für die Fahrzeugsitzpositionen optimiert wird, für welche bestimmt wurde, dass auf der Position ein Insasse vorhanden ist.

13. Verfahren nach einem der Ansprüche 7 bis 12, wobei das Signal eines Sitzdrucksensors zum Erfassen des Vorhandenseins eines Insassen erfasst wird.

14. Verfahren nach einem der Ansprüche 7 bis 13, wobei das Signal eines Bildsensors zum Erfassen des Vorhandenseins eines Insassen erfasst wird.

15. Verfahren nach einem der Ansprüche 7 bis 14, **dadurch gekennzeichnet, dass** das Verfahren ferner den Schritt eines Erfassens der Sprachaktivität eines Fahrzeuginsassen unter Berücksichtigung des Signals von einem Bildsensor umfasst.

## Revendications

1. Système de communication pour véhicule, comprenant:

    - une pluralité de microphones (110, 111, 112) adaptés à détecter des signaux de parole de différents passagers du véhicule,
    - un mélangeur (140) combinant les composantes de signal audio des différents microphones en un signal de sortie de parole résultant,
    - une unité de pondération (130) déterminant la pondération desdits composantes de signal audio pour le signal de sortie de parole résultant,

**caractérisé en ce que**
l'unité de pondération détermine la pondération des composantes de signal en tenant compte d'une information non-acoustique provenant d'un capteur (160) et concernant la présence d'un passager de véhicule,
et que, si la présence d'un passager dans une position déterminée de siège de véhicule ne peut pas être détectée, l'unité de pondération remet à zéro la pondération des composantes de signal de ladite position de siège de véhicule.

2. Système de communication pour véhicule selon la revendication 1, **caractérisé en ce qu'**il comprend en outre un capteur de pression de siège de véhicule, l'unité de pondération déterminant la pondération des composantes de signal audio en tenant compte des signaux provenant dudit capteur de pression.

3. Système de communication pour véhicule selon la revendication 1 ou 2, **caractérisé en ce qu'**il comprend en outre un capteur d'image, l'unité de pondération déterminant la pondération des composantes de signal audio en tenant compte des signaux dudit capteur d'image.

4. Système de communication pour véhicule selon l'une quelconque des revendications précédentes, **caractérisé en ce qu'**il comprend en outre une pluralité de haut-parleurs pour émettre des signaux audio, l'utilisation des différents haut-parleurs dépendant de ladite information sur la présence d'un passager de véhicule.

5. Système de communication pour véhicule selon l'une quelconque des revendications précédentes, **caractérisé en ce que** le capteur d'image détecte l'activité de parole d'un passager de véhicule.

6. Système de communication pour véhicule selon l'une quelconque des revendications précédentes, **caractérisé en ce qu'**il comprend en outre une unité de formation de faisceau qui génère un signal de parole de siège de véhicule combinant les signaux détectés en provenance d'une pluralité de microphones capturant des signaux de parole d'un unique passager assis sur un siège de véhicule.

**7.** Procédé de contrôle d'une sortie de parole d'un système de communication pour véhicule comprenant les étapes suivantes:

- détecter des signaux de parole d'au moins un passager de véhicule en utilisant une pluralité de microphones (110, 111, 112),
- pondérer les composantes de signal de parole détectées par les différents microphones,
- combiner les composantes de signal de parole pondérées en un signal de sortie de parole résultant,

**caractérisé en ce que** la pondération des différentes composantes de signal de parole est déterminée en tenant compte d'une information non-acoustique sur la présence de passagers de véhicule provenant d'un capteur (160), et

que la pondération des composantes de signal pour une position prédéterminée de siège de véhicule est remise à zéro lorsqu'on détecte qu'il n'y a pas de passager dans ladite position de siège de véhicule.

**8.** Procédé selon la revendication 7, **caractérisé en ce qu'**il comprend en outre l'étape de déterminer les composantes de signal audio pour les différentes positions de passager de siège de véhicule, la pondération des composantes de signal étant déterminée pour les différentes positions de siège de véhicule.

**9.** Procédé selon la revendication 7 ou 8, dans lequel le signal de parole résultant est utilisé pour

- l'opération par commande vocale d'un composant de véhicule;
- une communication conférence avec un abonné externe et au moins deux passagers de véhicule, et/ou
- la communication entre différents passagers de véhicule.

**10.** Procédé selon l'une quelconque des revendications 7 à 9, **caractérisé en ce qu'**il comprend en outre l'étape d'ajouter au signal de sortie de parole résultant les différentes composantes de signal pondérées détectées par le microphone.

**11.** Procédé selon l'une quelconque des revendications 7 à 10, **caractérisé en ce qu'**il comprend en outre l'étape de contrôler l'émission d'un signal audio par l'intermédiaire d'une pluralité de haut-parleurs en fonction de l'information non-acoustique au sujet de la présence d'un passager de véhicule pour une position de véhicule prédéterminée.

**12.** Procédé selon la revendication 11, **caractérisé en ce que** l'émission du signal audio par les haut-parleurs est optimisée pour les positions de siège de véhicule pour lesquels il a été déterminé qu'un passager est présent à ladite position.

**13.** Procédé selon l'une quelconque des revendications 7 à 12, dans lequel le signal d'un capteur de pression de siège est détecté pour détecter la présence d'un passager.

**14.** Procédé selon l'une quelconque des revendications 7 à 13, dans lequel le signal d'un capteur d'image est détecté pour détecter la présence d'un passager.

**15.** Procédé selon l'une quelconque des revendications 7 à 14, **caractérisé en ce qu'**il comprend en outre l'étape de détecter l'activité de parole d'un passager de véhicule en tenant compte du signal d'un capteur d'image.

FIG. 1

PASSENGER DETECTING UNIT — 150

WEIGHTING UNIT — 130

BEAMFORMER DRIVER $x_1(t)$ — 120

BEAMFORMER FRONT SEAT $x_2(t)$ — 121

NOISE REDUCTION $x_3(t)$ — 122

NOISE REDUCTION $x_4(t)$ — 123

MIXER $y(t)$ — 140

110

160

160

160

160

111

112

EP 1 850 640 B1

START — 210

DETECT SPEECH SIGNAL — 220

GENERATE SEAT RELATED SPEECH SIGNAL — 230

DETECT OCCUPATION STATUS — 240

SET SIGNAL COMPONENTS TO ZERO — 250

COMBINE REMAINING SEAT RELATED SPEECH SIGNALS — 260

END — 270

FIG. 2

```
                    ┌─────────────────────┐ ── 310
                    │        START        │
                    └─────────────────────┘
                               │
                               ▼
            ┌──────────────────────────────────────┐ ── 320
            │       DETECT OCCUPATION STATUS        │
            └──────────────────────────────────────┘
                               │
                               ▼
            ┌──────────────────────────────────────┐ ── 330
            │     OPTERNIZE LOUDSPEAKER OUTPUT      │
            │        FOR OCCUPIED SEAT(S)           │
            └──────────────────────────────────────┘
                               │
                               ▼
                    ┌─────────────────────┐ ── 340
                    │         END         │
                    └─────────────────────┘
```

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 200623892 A1